# EUROPÄISCHE PATENTSCHRIFT

(11) **EP 0 556 221 B1**
(45) Veröffentlichungstag und Bekanntmachung des Hinweises auf die Patenterteilung: **10.05.1995**
(21) Anmeldenummer: 91918732.8
(22) Anmeldetag: 06.11.1991
(51) Int. Cl.: G01C 21/20, G08G 1/0968

(54) **VERFAHREN ZUR HOCHFREQUENTEN DATENÜBERTRAGUNG VON FAHRINFORMATIONEN UND VORRICHTUNGEN DAZU**
PROCESS FOR THE HIGH-FREQUENCY DATA TRANSMISSION OF DRIVING INFORMATION AND DEVICES THEREFOR
PROCEDE POUR LA TRANMISSION D'INFORMATIONS ROUTIERES PAR RADIOFREQUENCE ET DISPOSITIFS CORRESPONDANTS

(30) Priorität: 07.11.1990 DE 4035398
(43) Veröffentlichungstag der Anmeldung: 25.08.1993
(73) Patentinhaber: ROBERT BOSCH GMBH, 70442 Stuttgart (DE)
(72) Erfinder: BRAEGAS, Peter, D-3200 Hildesheim (DE); OHLER, Michael, D-3211 Despetal 2 (DE)
(86) Internationale Anmeldenummer: DE9100861
(87) Internationale Veröffentlichungsnummer: WO9208954

(56) Entgegenhaltungen:
- AU-D- 2 240 377
- DE-A- 2 925 656
- Conference Record of the First Vehicle Navigation and Information Systems Conference (VNIS89), 11.-13. September 1989, Ontario, CA, Seiten 376-383, Shibano et al: "Development of mobile communication system for RACS"
- E. Herter et al: "Nachrichtenübertragung über Satelliten", 1979, Springer, Berlin, DE

## Beschreibung

### Stand der Technik

Die Erfindung geht aus von einem Verfahren zur hochfrequenten Datenübertragung von Fahrinformationen nach der Gattung des Hauptanspruchs. Aus der DE-OS 29 25 656 ist ein Verfahren und eine Vorrichtung zur Zielführung von Landfahrzeugen bekanntgeworden, bei der Fahrinformationen mittels einer im Bereich der Straße angebrachten Bake übertragen werden. Über diese Baken werden von einem Verkehrsleitrechner Informationen über den Straßenzustand und die Fahrmöglichkeiten zum Fahrzeug übertragen, so daß sich der Fahrer eines Fahrzeuges im Straßenverkehr besser orientieren kann. Es hat sich nun gezeigt, daß insbesondere bei breiten Straßen mit einer Vielzahl von Fahrspuren eine einzige Bake nicht genügt, um sämtlichen Fahrzeugen die Informationen zu übertragen, da insbesondere im Nachbereich der Bakenstrahl durch größere Fahrzeuge verdeckt werden kann, so daß benachbarte Fahrzeuge nicht in der Lage sind, die Bakeninformation aufzunehmen. Es ist daher bereis vorgeschlagen worden, insbesondere bei breiten Straßen zwei oder mehr Baken anzubringen, so daß die Fahrzeuge auf jeder Fahrspur individuell die Bakeninformation erhalten können. Dabei hat sich gezeigt, daß durch stehende Wellen sowohl Überhöhungen als auch Auslöschungen des Wellenfeldes auftreten können, so daß ein Fahrzeug insbesondere im Bereich einer Auslöschung die von den Baken ausgestrahlten Daten nicht sicher empfangen kann.

### Vorteile der Erfindung

Das erfindungsgemäße Verfahren zur hochfrequenten Datenübertragung von Fahrinformationen mit den kennzeichnenden Merkmalen des Hauptanspruchs hat demgegenüber den Vorteil, daß stehende Wellen und dadurch bedingte Auslöschungen des Wellenfeldes sicher vermieden werden. Dadurch wird erreicht, daß alle Fahrzeuge einer Straße die von den Baken ausgestrahlten Informationen sicher empfangen, auch wenn sich diese Fahrzeuge nicht auf bestimmten Fahrspuren bewegen. Es wird daher sichergestellt, daß die Information lückenlos zur Verfügung gestellt wird und empfangbar ist.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist es, die hochfrequente Datenübertragung im Bereich von 1 bis 10 GHz erfolgen zu lassen. Durch diese Maßnahme wird erreicht, daß einerseits der Ort der Datenübertragung relativ genau zu begrenzen ist und andererseits noch eine hinreichende Übertragungsweite gegeben ist, so daß der Fahrer eines Fahrzeuges rechtzeitig, beispielsweise vor einer Kreuzung, informiert wird. Weiterhin ist günstig, die Bandbreite des rauschähnlichen Spektrums auf etwa das 5- bis 10-fache der Bandbreite der Nutzmodulation festzulegen. Dadurch wird erreicht, daß einerseits eine gute Trennung zwischen Rauschen und Nutzmodulation möglich ist und andererseits sich die erforderliche Bandbreite für die Übertragung in Grenzen hält.

Die Anmeldung betrifft auch vorrichtungen zur Ausführung des Verfahrens (Ansprüche 5 und 7).

Die Vorrichtung zur hochfrequenten Datenübertragung der Fahrerinformation weist vorteihafter Weise einen Amplitudenmodulator auf, der durch das rauschähnliche digitale Signal angesteuert wird. Durch diese Maßnahme läßt sich das erfindungsgemäße Verfahren besonders einfach realisieren. Zweckmäßigerweise folgt dem ersten Modulator ein zweiter Modulator, der vorteilhafter Weise ebenfalls als Amplitudenmodulator ausgebildet ist, mit dem dem verrauschten Träger die Nutzinformation aufgeprägt wird.

Zum Empfangen der hochfrequenten Datenübertragungssignale ist es besonders vorteilhaft, der Empfangsantenne einen Bandpaß nachzuschalten, dem ein Gleichrichter und ein Tiefpaß folgt. Durch diese Maßnahme läßt sich das übertragene Spektrum besonders einfach auswerten. Besonders vorteilhaft ist, wenn dem Tiefpaß ein weiterer Gleichrichter nachgeschaltet ist. Mit dieser Maßnahme läßt sich erreichen, daß vom Empfangssystem erkannt wird, wann Daten an den Empfänger gelangen, wobei erst nach dem Eintreffen dieser Daten durch den weiteren Gleichrichter eine Gleichspannung erzeugt wird, mittels der die Auswerteeinrichtungen freigeschaltet werden. Der Stromverbrauch der Empfangseinrichtung wird dadurch minimisiert, da die gesamte Auswerteelektronik nur beim Datenempfang in Betrieb genommen werden muß.

Vorteilhaft ist auch, die Eckfrequenz des Tiefpasses höher als die Frequenz der übertragenen Nutzinformation und niederer als das aufmodulierte rauschähnliche Spektrum zu wählen. Durch diese Ausgestaltung des Tiefpasses ist eine sehr gute Trennung zwischen dem Rauschanteil und der Nutzinformation möglich. Besonders vorteilhaft ist, den Bandpaß, die Gleichrichter und den Tiefpaß aus passiven Bauelementen aufzubauen. Dadurch wird für die Empfangseinrichtung keinerlei Stromversorgung benötigt, so daß im nicht aktivierten Zustand für die im Fahrzeug befindliche Empfangseinrichtung keinerlei Versorgungsstrom benötigt wird. Erst wenn Daten übertragen werden, wird durch den weiteren Gleichrichter die Auswerteschaltung in Betrieb genommen, so daß im Ruhezustand kein Strom durch die Empfangseinrichtung fließt.

### Zeichnung

Ein Ausführungsbeispiel der Erfindung ist in der Zeichnung dargestellt und in der nachfolgenden Beschreibung näher erläutert. Es zeigen Figur 1 eine Straße mit zwei am Straßenrand angebrachten Baken, Figur 2 eine Sendevorrichtung für eine Bake und Figur 3 eine Empfangseinrichtung für ein Fahrzeug.

### Beschreibung des Ausführungsbeispiels

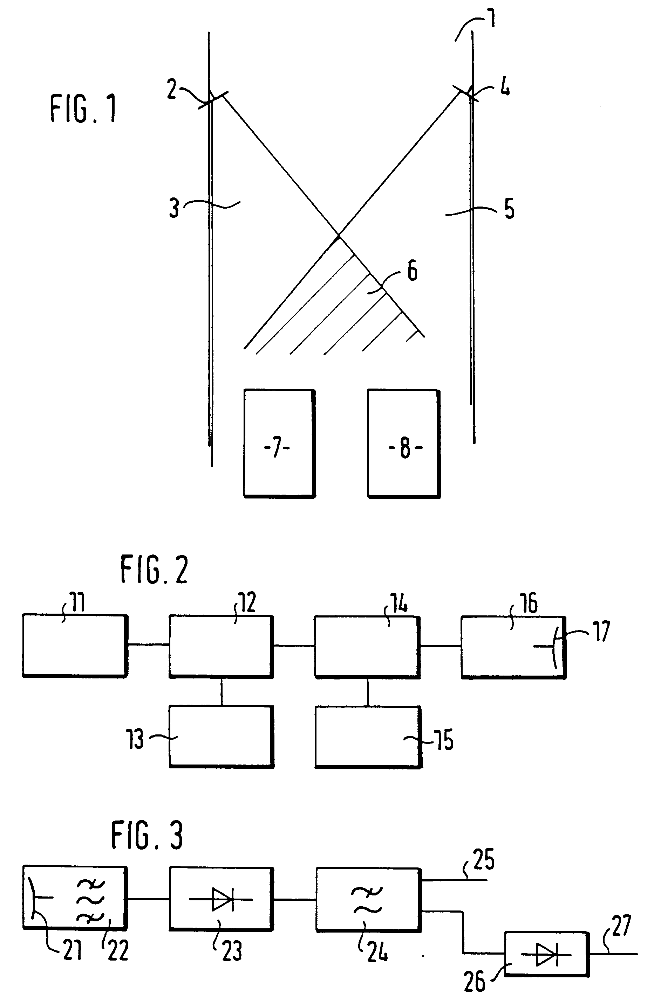

In Figur 1 ist eine Straße 1 dargestellt, in der beispielsweise zwei Fahrzeuge 7 und 8 nebeneinander fahren können. Am linken und rechten Straßenrand sind jeweils eine Bake 2 und 4 aufgestellt, mittels der es möglich ist, zu den passierenden Fahrzeugen 7 und 8 Informationen zu übertragen. Solche Baken sind vorteilhafterweise in der Nähe von oder an Kreuzungen aufgestellt, so daß dem Fahrer vor der Kreuzung Informationen über den Straßenzustand nach der Kreuzung gegeben werden können, so daß der Fahrer mit seiner Richtungswahl entsprechend der Verkehrssituation reagieren kann. Die Fahrzeuge 7 und 8 weisen hier nicht dargestellte Empfänger auf, mit denen sie in der Lage sind, die Signale von den Baken 2 und 4 aufzunehmen. Die Baken 2 und 4 arbeiten in Gigahertzbereich, vorzugsweise im Bereich zwischen 1 und 10 Gigahertz. Als besonders vorteilhaft hat sich eine Übertragungsfrequenz von 5,8 Gigahertz bewährt. Durch diese Wahl der Frequenz ist der Ort der Datenübertragung auf dem Bereich einiger Meter bis einige zehn Meter begrenzt, so daß gleichzeitig mit dem Empfang des Bakensignals eine eindeutige Ortserkennung möglich ist, da die Position der Bake durch den Bakensender mit übertragen werden kann und durch den begrenzten Empfangsbereich eine eindeutige Zuordnung möglich ist, auch wenn sich im Bereich der Straße mehrere Baken in kurzen Abständen befinden sollten. Der Ausstrahlbereich der Bake 2 ist in der Figur 1 mit 3 bezeichnet, während der Ausstrahlbereich der Bake 4 in der Figur 1 mit 5 bezeichnet ist. Durch die Verwendung zweier oder mehrerer Baken wird erreicht, daß die sendende Bake nicht durch andere Fahrzeuge verdeckt werden kann, was beispielsweise dann der Fall wäre, wenn lediglich die Bake 4 vorhanden wäre und das Fahrzeug 8 gegenüber dem Fahrzeug 7 so versetzt angeordnet fährt, daß die Abstrahlung der Bake 4 durch das Fahrzeug 8 abgeschattet wäre. Üblicherweise werden für die Datenübertragung im Gigahertzbereich kohärente Strahlen verwendet, was zur Folge hat, daß sich stehende Wellen zwischen den beiden Strahlen der Bake 2 und 4 ausbilden können, die sowohl Überhöhungen als auch Auslöschungen im sich überschneidenden Wellenfeld bewirken können. Dieses überschneidende Wellenfeld ist in der Figur 1 mit 6 bezeichnet. Fährt nun das Fahrzeug 7 bzw. 8 gerade im Bereich einer Auslöschung, so ist der Empfang der Daten nicht mehr sichergestellt, da durch die Auslöschung der Strahlung der Bake 2 und der Bake 4 vom Fahrzeug kein Träger mehr aufgenommen werden kann.

Durch die erfindungsgemäße Maßnahme wird die Kohärenz der Strahlen im interessierenden Bereich aufgehoben. Dazu wird der Senderoszillator der Baken 2 und 4 zusätzlich mit einem rauschähnlichen Spektrum moduliert, dessen Bandbreite größer ist als die Bandbreite der Nutzmodulation, die vorzugsweise digital übertragen wird.

Figur 2 zeigt einen Bakensender, wie er beispielsweise für die Baken 2 und 4 Verwendung finden kann. Der Oszillator 11 erzeugt ein Signal im Gigahertzbereich, das einem Amplitudenmodulator 12 zugeführt wird. Der Amplitudenmodulator 12 wird des weiteren von einem Generator 13 gespeist, der pn-Folgen im Goldcode erzeugt. Solche Generatoren zur Erzeugung von pn-Folgen im Goldcode sind beispielsweise aus dem Buch Herter, Rupp, Nachrichtenübertragung über Satelliten, 2. Auflage 1983, Springer Verlag, Seite 60 ff bekannt. Das Ausgangssignal des Modulators 12 wird nun einem weiteren Modulator 14 zugeführt, der ebenfalls als Amplitudenmodulator ausgebildet ist. Der weitere Modulator 14 steht mit einem Nutzsignalgenerator 15 in Verbindung, der die zu übertragene Nutzimformation aufmoduliert. Der Ausgang des Modulators 14 führt schließlich zu einem Sendeverstärker 16, der die Sendeleistung über eine Parabolantenne 17 an die Fahrzeuge, die die Bake passieren, überträgt.

Die Wirkungsweise der Schaltungsanordnung ist wie folgt: Durch den ersten Modulator 12 wird des konstante Frequenzsignal des Oszillators 11 mit einem rauschähnlichen Spektrum moduliert, dessen Bandbreite signifikant größer ist als die Bandbreite der Nutzmodulation. Wird z.B. dem Sender eine Datenrate von 1 Megabit pro Sekunde aufmoduliert, so sollte die Bandbreite des zusätzlichen Rauschsignals etwa das 5- bis 10-fache betragen, also 5-10 Megahertz.

Zur Rauschmodulation können vorzugsweise Pseudonoise-(pn)-Folgen verwendet werden, die individuell für jeden Sender festgelegt werden. Hierzu können vorteilhafterweise sogenannte Goldcodes benutzt werden, die minimale Kreuz- und Autokorrelationseigenschaften besitzen. Dadurch ist es möglich, durch einen Tiefpaß das Spektrum der pn-Folge hinter der ersten Nullstelle abzuschneiden, so daß sich die Bandbreite sehr gut begrenzen läßt. Durch die pn-Folgen wird der Modulator 12 getaktet, so daß das 5,8 GHz-Signal in verrauschter Form an den Eingang des Modulators 14 gelangt. Der Modulator 14 wird nun mit dem vorzugsweise digitalen Signal des Informationsgenerators 15 moduliert. Dieses Signal sollte in seiner Bandbreite in etwa um das 5- bis 10-fache niedriger sein, als das Rauschsignal. Wird beispielsweise das Rauschsignal mit einer Bandbreite von 10 Megahertz gewählt, so könnte auf dem Modulator 14 durch den Informationsgenerator 15 eine Datenrate von etwa 1 Megabit pro Sekunde aufmoduliert werden. Das so gebildete Signal wird nun verstärkt und über die Antenne 17 abgestrahlt. Um Kohärenz sicher zu vermeiden ist es erforderlich, daß die Baken 2 und 4 gleichermaßen ausgebildet sind, wobei jedoch die pn-Folge für die Bake 2 und die Bake 4 verschieden sein muß, um nicht zufälligerweise wieder zu kohärenten Signalen zu gelangen.

Die Auswertung einer solchen Mikrowellendatenübertragung in den Fahrzeugen 7 und 8 ist auf besonders einfache Weise durch die in Figur 3 gezeigte Schaltung möglich. Die Empfangsantenne 21 empfängt die von den Baken 2, 4 abgegebenen Signale im Bakenbereich. Die so empfangenen Signale werden einem Bandpaß 22 zugeführt, der lediglich die Bakenfrequenz von beispielsweise 5,8 Gigahertz passieren läßt. Der Bandpaß steht mit einem Gleichrichter 23 in Verbindung, in dem das Bakensignal gleichgerichetet wird. Des weiteren folgt ein Tiefpaß 24, der das Nutzsignal herausfiltert. Am Ausgang 25 des Tiefpasses 24 steht nun das digitale Nutzsignal zur Verfügung, das mittels einer Rechenschaltung auszuwerten ist und dem Fahrer akustisch oder optisch anzeigbar ist. Ein weiterer Ausgang des Tiefpasses 24 führt zu einem Gleichrichter 26. Am Ausgang des Gleichrichters 26 steht an der Leitung 27 dann ein Signal an, wenn vom Tiefpaß 24 ein digitaler Datenfluß ausgefiltert worden ist. Dieser wird gleichgerichtet und führt am Ausgang des Gleichrichters 26 zu einer Gleichspannung, die zum Schalten einer Stromversorgung dient. Die Rechnerschaltung zur Auswertung des Datenflusses 25 kann daher durch das Ausgangssignal an der Leitung 27 ein- bzw. ausgeschaltet werden.

Die Bauelemente 22, 23 und 24 können rein passiv ausgeführt werden, so daß der Empfänger sich als einfache Geradeausschaltung realisieren läßt, für die keine Stromversorgung erforderlich ist. Der Tiefpaß 24 muß hierbei so ausgelegt sein, daß er die Nutzsignale einwandfrei passieren läßt, jedoch die Rauschsignale absperrt. Die Eckfrequenz des Tiefpasses muß daher größer sein als die Datenrate des Nutzsignals jedoch kleiner als die pn-Folge des Rauschsignals. Für den Fall einer Datenrate von 1 Megabit pro Sekunde ist daher die Eckfrequenz des Tiefpasses 24 größer als 1 Megahertz zu bilden, und für den Fall eines Rauschsignales von 10 Megabit pro sec muß die Eckfrequenz kleiner als 10 Megahertz sein. Hieraus wird auch ersichtlich, daß das Verhältnis von Rauschsignal- zu Nutzsignalbandbreite im wesentlichen durch den Tiefpaß 24 mit bestimmt wird, und den Aufwand, den man hierfür im Fahrzeugempfänger betreiben möchte. Durch den ebenfalls passiv auszuführenden Gleichrichter 26 wird erreicht, daß die gesamte Schaltungsanordnung vom Fahrzeug keinen Strom benötigt, solange keine Datensignale empfangen werden. Erst dann, wenn sich das Fahrzeug im Bereich einer Bake befindet und von dort Signale aufgenommen werden, erfolgt ein Einschalten der nicht dargestellten Auswerteschaltung, was dann einen Stromverbrauch im Fahrzeug durch die Empfangseinrichtung bewirkt.

Das Ausführungsbeispiel ist keinesfalls auf zwei Baken beschränkt, vielmehr ist es möglich, bei sehr breiten Straßen auch mehrere Baken beispielsweise auf einem Brückenträger in Verbindung mit Verkehrsschildern anzuordnen. Dadurch wird sicher erreicht, daß die Baken jedes Fahrzeug erreichen können und nicht durch Abschirmung oder Trägerauslöschungen einige Fahrzeuge ganz oder teilweise keine Informationen erhalten.

## Patentansprüche

1. Verfahren zur hochfrequenten Datenübertragung von Fahrinformationen von ortsfesten Baken zu Fahrzeugen, wobei zumindest zwei ortsfeste Baken vorgesehen sind, dadurch gekennzeichnet, daß das Hochfrequenzsignal jedes Bakensenders (2, 4) mit einem rauschähnlichen Spektrum, vorzugsweise mit Pseudonoise-Folgen im Goldcode, moduliert wird, dessen Bandbreite größer ist als die Bandbreite der zu übertragenden Nutzinformation.

2. Verfahren nach Anspruch 1, dadurch gekennzeichnet, daß die hochfrequente Datenübertragung im Bereich 1-10 Gigahertz erfolgt.

3. Verfahren nach Anspruch 1 oder 2, dadurch gekennzeichnet, daß die Bandbreite des rauschähnlichen Spektrums in etwa das 5-10 fache der Bandbreite der Nutzinformation beträgt.

4. Verfahren nach einem der vorhergehenden Ansprüche, dadurch gekennzeichnet, daß jedem Bakensender (2, 4) ein anderes rauschähnliches Spektrum aufmoduliert wird.

5. Vorrichtung zur hochfrequenten Datenübertragung von Fahrinformationen nach einem Verfahren nach den Ansprüchen 1 bis 4 mit einem ortsfesten Bakensender (2), der mit einem weiteren ortsfesten Bakensender (4) zusammenwirkt, dadurch gekennzeichnet, daß jeder der Bakensender (2, 4) einen Modulator (12), vorzugsweise einen Amplitudenmodulator, aufweist, der durch einen ein rauschähnliches, vorzugsweise digitales Signal abgebenden Generator (13) gesteuert ist.

6. Vorrichtung nach Anspruch 5, dadurch gekennzeichnet, daß dem Modulator (12) ein weiterer Modulator (14) zum Aufbringen der Nutzinformation folgt.

7. Vorrichtung zum Empfang hochfrequenter Datenübertragungssignale nach einem Verfahren der Ansprüche 1 bis 4 mit einer Empfangsvorrichtung und einer daran angeschlossenen Empfangsantenne (21), dadurch gekennzeichnet, daß der Empfangsantenne (21) ein auf die hochfrequenten Datenübertragungssignale abgestimmter Bandpaß (22) nachgeschaltet ist, dem ein Gleichrichter (23) und ein Tiefpaß (24) folgt, der die Rauschsignale absperrt und die Nutzinformation passieren läßt.

8. Vorrichtung nach Anspruch 7, dadurch gekennzeichnet, daß dem Tiefpaß (24) ein weiterer Gleichrichter (26) nachgeschaltet ist.

9. Vorrichtung nach Anspruch 7 oder 8, dadurch gekennzeichnet, daß die Eckfrequenz des Tiefpasses (24) höher ist als die Frequenz der übertragenen Nutzinformation und niedriger als das aufmodulierte rauschähnliche Spektrum.

10. Vorrichtung nach Anspruch 7 bis 9, dadurch gekennzeichnet, daß die Empfangsvorrichtung (21 bis 26) aus passiven Bauelementen aufgebaut sind.

## Claims

1. A method for high-frequency data transmission of travel information from stationary beacons to vehicles, in which at least two stationary beacons are provided, wherein the high-frequency signal of each beacon transmitter (2, 4) is modulated by a noise-like spectrum, preferably by pseudonoise sequences in the Gold code, the bandwidth of which is greater than the bandwidth of the user information to be transmitted.

2. The method as claimed in claim 1, wherein the high-frequency data transmission is carried out in the 1-10 gigahertz range.

3. The method as claimed in claim 1 or 2, wherein the bandwidth of the noise-like spectrum is approximately 5-10 times the bandwidth of the user information.

4. The method as claimed in one of the preceding claims, wherein a different noise-like spectrum is modulated onto each beacon transmitter (2, 4).

5. A device for high-frequency data transmission of travel information according to a method as claimed in claims 1 to 4, having a stationary beacon transmitter (2) which interacts with a further stationary beacon transmitter (4), wherein each of the beacon transmitters (2, 4) has a modulator (12), preferably an amplitude modulator, which is controlled by a generator (13) that outputs a noise-like, preferably digital, signal.

6. A device as claimed in claim 5, wherein the modulator (12) is followed by a further modulator (14) for the application of the user information.

7. A device for receiving high-frequency data transmission signals according to a method of claims 1 to 4, having a receiving device and a receiving antenna (21) connected thereto, wherein connected downstream of the receiving antenna (21) is a bandpass filter (22) tuned to the high-frequency data transmission signals, which is followed by a rectifier (23) and a low-pass filter (24) which blocks the noise signals and allows the user information to pass.

8. A device as claimed in claim 7, wherein a further rectifier (26) is connected downstream of the low-pass filter (24).

9. A device as claimed in claim 7 or 8, wherein the corner frequency of the low-pass filter (24) is higher than the frequency of the user information transmitted and lower than the noise-like spectrum modulated thereon.

10. A device as claimed in claims 7 to 9, wherein the receiving devices (21 to 26) are constructed from passive components.

## Revendications

1. Procédé de transmission à haute fréquence, de données d'informations de circulation à partir de radiobalises fixes vers des véhicules, au moins deux balises fixes étant prévues, procédé caractérisé en ce que le signal de fréquence de bruit d'une radiobalise (2, 4) est modulé par un spectre analogue à du bruit, de préférence par des suites de pseudo bruits en code gold, dont la largeur de bande est supérieure à la largeur de bande de l'information utile à transmettre.

2. Procédé selon la revendication 1, caractérisé en ce que la transmission haute fréquence se fait dans la plage de 1-10 Gigahertz.

3. Procédé selon la revendication 1 ou 2, caractérisé en ce que la largeur de bande du spectre analogue à du bruit correspond à environ 5 à 10 fois la largeur de bande de l'information utile.

4. Procédé selon l'une des revendications précédentes, caractérisé en ce que pour chaque émetteur de radiobalise (2, 4) on prévoit en modulation un autre spectre analogue à du bruit.

5. Dispositif de transmission de données à haute fréquence d'informations de circulation routière selon un procédé correspondant aux revendications 1 à 4, avec un émetteur de radiobalise (2), fixe qui coopère avec un autre émetteur de radiobalise (4), fixe, dispositif caractérisé en ce que chaque émetteur de radiobalise (2, 4) comporte un modulateur (12), de préférence un modulateur d'amplitude, qui est commandé par un générateur (13) émettant un signal de préférence numérique analogue à du bruit.

6. Dispositif selon la revendication 5, caractérisé en ce que le modulateur (12) est suivi par un autre modulateur (14) pour appliquer l'information utile.

7. Dispositif de réception de signaux de transmission de données à haute fréquence selon un procédé défini dans les revendication 1 à 4 avec un dispositif de réception auquel est reliée une antenne de réception (21), dispositif caractérisé en ce que l'antenne de réception (21) est suivie d'un filtre passe-bande (22) accordé sur des signaux de transmission de données à haute fréquence, suivi d'un redresseur (23) et d'un filtre passe-bas (24) qui arrête les signaux de bruit et ne laisse passer que l'information utile.

8. Dispositif selon la revendication 7, caractérisé en ce qu'un autre redresseur (26) est prévu en aval du filtre passe-bas (24).

9. Dispositif selon la revendication 7 ou 8, caractérisé en ce que la fréquence limite du filtre passe-bas (24) est supérieure à la fréquence de l'information utile à transmettre et inférieure au spectre analogue à du bruit, appliqué en modulation.

10. Dispositif selon les revendications 7 à 9, caractérisé en ce que le dispositif de réception (21-26) est formé de composants passifs.
